# EUROPÄISCHE PATENTSCHRIFT

(11) **EP 0 962 750 B1**
(45) Veröffentlichungstag und Bekanntmachung des Hinweises auf die Patenterteilung: **10.12.2003**
(21) Anmeldenummer: 99110535.4
(22) Anmeldetag: 01.06.1999
(51) Int. Cl.: G01F 9/00

(54) **Verfahren zum Ermitteln des Treibstoffverbrauches bzw. des Betriebszustandes von Verbrennungskraftmaschinen**
Method for determining the fuel consumption and the operational status of an internal combustion engine
Procédé pour déterminer la consommation de carburant et la condition de fonctionnement d'un moteur de combustion interne

(30) Priorität: 05.06.1998 AT 97398
(43) Veröffentlichungstag der Anmeldung: 08.12.1999
(73) Patentinhaber: Kräutler G.m.b.H. & Co, 6893 Lustenau (AT)
(72) Erfinder: Grabher, Reinhard Ing., 6890 Lustenau (AT); Flauger, Thomas Dipl.-Phys Ing., 6840 Götzis (AT); Feierle, Karl-Heinz, 6850 Dornbirn (AT)
(74) Vertreter: Hefel, Herbert, Dipl.-Ing.

(56) Entgegenhaltungen:
- EP-A- 0 136 828
- EP-A- 0 490 709
- US-A- 4 544 909
- US-A- 4 706 083

## Beschreibung

Die Erfindung bezieht sich auf ein Verfahren zum Ermitteln des Treibstoffverbrauches bzw. des Betriebszustandes bei bzw. von Verbrennungskraftmaschinen mit einer Treibstoffeinspritzpumpe nach den Merkmalen des Oberbegriffes des Patentanspruches 1.

Bei den bisher verwendeten und damit vorbekannten Verfahren wurden die von den Meßgeräten gelieferten Impulse addiert, evtl. abgeglichen und umgeformt, und dann wurde die Summe dieser Impulse zur Zählung und Anzeige des Treibstoffverbrauches herangezogen. Wurde zur Kontrolle der Meßgenauigkeit in der Folge der effektive Inhalt des Treibstoffvorratsbehälters mit den durch die Messung erhaltenen Werten verglichen, so mußten zum Teil recht erhebliche Abweichungen festgestellt werden, die die Zweckmäßigkeit einer solchen Messung fraglich haben erscheinen lassen. Solche Abweichungen fallen in folgenden Fällen auf:
- Bei Dieselgeneratoren und bei Fahrzeugmotoren dadurch, daß der Tankinhalt und der Meßwert nicht übereinstimmen.
- Bei Dieselgeneratoren während der Abnahme und Inbetriebsetzung dadurch, daß im Kraftstoffsystem für die Zeit der Abnahme ein Behälter integriert wird, mit dem die Kraftstoffmenge gewogen wird. Zusammen mit der Dichte des Brennstoffes wird dann der Verbrauch hinsichtlich der zugesicherten Eigenschaft kontrolliert. Dabei fallen auch Abweichungen des Durchflußmessers auf.
- In Prüfständen weichen die Verbrauchswerte so stark von den theoretisch errechneten Werten ab, daß das Ergebnis der Verbrauchsmessung schlicht unglaubwürdig ist.

Intensive und langdauernde Versuche und Untersuchungen haben gezeigt, daß bei Verbrennungskraftmaschinen hoher Leistung, insbesondere bei Dieselaggregaten, deren Treibstoffeinspritzpumpen als Kolbenpumpen ausgebildet sind, aufgrund der konstruktiven Gegebenheiten und aufgrund der Arbeitsweise einer solchen Kolbenpumpe in den Treibstoffleitungen Druckwellen und Druckschwingungen erheblichen Ausmaßes erzeugt werden. Diese Druckwellen und -schwingungen sind zum Teil so erheblich und wirken in der Weise, daß der Treibstoff in den erwähnten Leitungen in Abhängigkeit der Frequenz dieser Wellen und Schwingungen, wenn auch nur jeweils kurzzeitig, seine an sich vorgegebene Strömungsrichtung ändert, also sozusagen zurückfließt. Die davon betroffenen Treibstoffmengen sind bei Aggregaten hoher Leistung über die gesamte Betriebszeit des Aggregates gesehen nicht zu vernachlässigen, wenn es darum geht, den Treibstoffverbrauch des Aggregates möglichst exakt zu ermitteln und zu erfassen. Darüberhinaus sind aus dem tatsächlichen Treibstoffverbrauch sowie aus der Strömungsrichtung und der Frequenz des Wechsels der Strömungsrichtung Rückschlüsse auf den Betriebszustand der Verbrennungskraftmaschine möglich.

In diesem Zusammenhang ist die EP 0 490 709 A2 zu nennen, die eine Einrichtung zum Ermitteln des Treibstoffverbrauches zeigt und beschreibt. Die Meßeinrichtung besitzt hier einen Kolbendurchflußmesser. Bei solchen Kolbendurchflußmessern ist die hin- und hergehende Bewegung des Kolbens ein Maß für die Durchflußmenge. Mit dem Kolben des Kolbendurchflußmessers sind bei dieser vorbekannten Konstruktion Magnete verbunden, die vom Kolben bewegt Schaltkontakte betätigen, wobei die Häufigkeit der Schalterbetätigung als Maß für die Durchflußmenge dient. Diese Art der Messung ist nicht hinreichend genau, da der Kolbendurchflußmesser nicht differenzieren kann, in welcher Richtung das ihn durchfließende Medium strömt.

Aufgabe und Ziel der Erfindung ist es daher, das Verfahren in der Weise weiter zu entwickeln, daß möglichst exakte und den Gegebenheiten Rechnung tragende Meßergebnisse betreffend den Treibstoffverbrauch erhalten werden können. Zur Lösung dieser Aufgabe schlägt die Erfindung jene Maßnahmen vor, die Inhalt und Gegenstand des kennzeichnenden Teiles des Patentanspruches 1 sind. Die Entstehung der Druckpulsationen im Niederdrucksystem wird in dem Bericht "Einspritzpumpenkavitation, Vorhaben Nr. 558, Heft 629, 1996, Frankfurt am Main" der Forschungsvereinigung Verbrennungskraftmaschinen e. V. (FVV) beschrieben. Hier geht es um die Entwicklung von Dämpfern, um die Schäden, verursacht durch Kavitation, auf die Einspritzpumpe zu verhindern. Die Forschungsarbeit erkennt nicht den Effekt der Flußumkehr.

Zweckmäßigerweise wird als Meßgerät ein Schraubenspindelverdrängungsvolumeter mit mindestens zwei zueinander versetzten Sensoren verwendet. Solche Schraubenspindelverdrängungsvolumeter sind beispielsweise aus der AT 400 766 B bekannt. Es können aber auch solche Schraubenspindelverdrängungsvolumeter verwendet werden, die als impulsgebende Vorrichtung eine Fächer- oder Zahnscheibe verwenden, wie dies im Zusammenhang mit der EP 0 572 621 B1 bekannt ist, wobei in diesem Falle pro impulsgebender Vorrichtung zwei am Umfang des Gehäuses winkelmäßig versetzte Sensoren vorgesehen sind, so daß zeitlich gegeneinander versetzte Impulsfolgen gewonnen werden, aus deren Verlauf die jeweilige Strömungsrichtung ableitbar ist.

Anhand der Zeichnung wird die Erfindung näher veranschaulicht. Es zeigen:
- Fig. 1: schematisch die Meßanlage und
- Fig. 2: eine vergrößerte Darstellung des Anzeigefeldes des Zählers.

Ein leistungsstarkes Dieselaggregat 1, beispielsweise ein Dieselmotor, besitzt eine Treibstoffeinspritzpumpe 2, die als Kolbenpumpe ausgebildet ist und die über eine Zuführleitung 3 mit einem Treibstoffvorratsbehälter 4 verbunden ist. Der an die Treibstoffeinspritzpumpe 2 gelieferte, aber aufgrund sich ändernder Leistungsanforderungen nicht benötigte Treibstoff wird über die Rückführleitung 5 zum Treibstoffvorratsbehälter 4 zurückgeleitet. Sowohl in der Zuführleitung 3 wie auch in der Rückführleitung 5 ist je ein das durchfließende Treibstoffvolumen erfassendes Meßgerät 6 bzw. 7 vorgesehen. Beide Meßgeräte sind zweckmäßigerweise als Schraubenspindelverdrängungsvolumeter ausgebildet. Ein solches hier verwendetes Schraubenspindelverdrängungsvolumeter ist beispielsweise in der AT 400 766 B gezeigt und beschrieben. Jedes dieser Meßgeräte besitzt zwei, auf die Anzahl der Umdrehungen einer Schraubenspindel ansprechende Sensoren 8 und 9, wobei diese Sensoren 8 und 9 so angeordnet sind, daß je nach Drehrichtung und gegebenenfalls der Drehgeschwindigkeit der Schraubenspindel unterschiedliche Impulsfolgen gewonnen werden. Die von den Sensoren 8 und 9 der beiden Meßgeräte 6 und 7 über die Verbindungsleitungen 10 und 11 zu Impulsselektoren 12 und 13 geleiteten Impulsfolgen sind somit abhängig von der jeweiligen Drehrichtung und gegebenenfalls der Drehgeschwindigkeit einer Schraubenspindel und damit von der jeweiligen Durchströmrichtung des Meßgerätes. Im Impulsselektor 12 werden die aus dem Zufluß und dem eventuellen Rückfluß des Treibstoffes sich ergebenden Impulse aufbereitet, wobei die hier gewonnene Impulszahl ein Maß für die tatsächlich zur Treibstoffeinspritzpumpe 2 geflossene Treibstoffmenge ist. Sinngemäß wird im Impulsselektor 13 verfahren, so daß hier eine Impulszahl erhalten wird, die dem in den Treibstoffvorratsbehälter 4 tatsächlich zurückgeführten Treibstoffvolumen entspricht. In einem als Zähler 14 ausgebildeten Auswertgerät wird dann die zur Treibstoffeinspritzpumpe 2 geströmte Treibstoffmenge und die zum Treibstoffvorratsbehälter 4 zurückgeleitete Treibstoffmenge angezeigt, ferner deren Differenz und evtl. der zeitbezogenen Menge.

Die Impulse werden strömungsrichtungsabhängig ermittelt. Trotz der konstruktionsbedingten periodischen und kurzzeitig auftretenden Rückflüsse des Treibstoffes kann dank der vorgeschlagenen Maßnahme der tatsächliche Treibstoffverbrauch mit hoher Genauigkeit erfaßt werden.

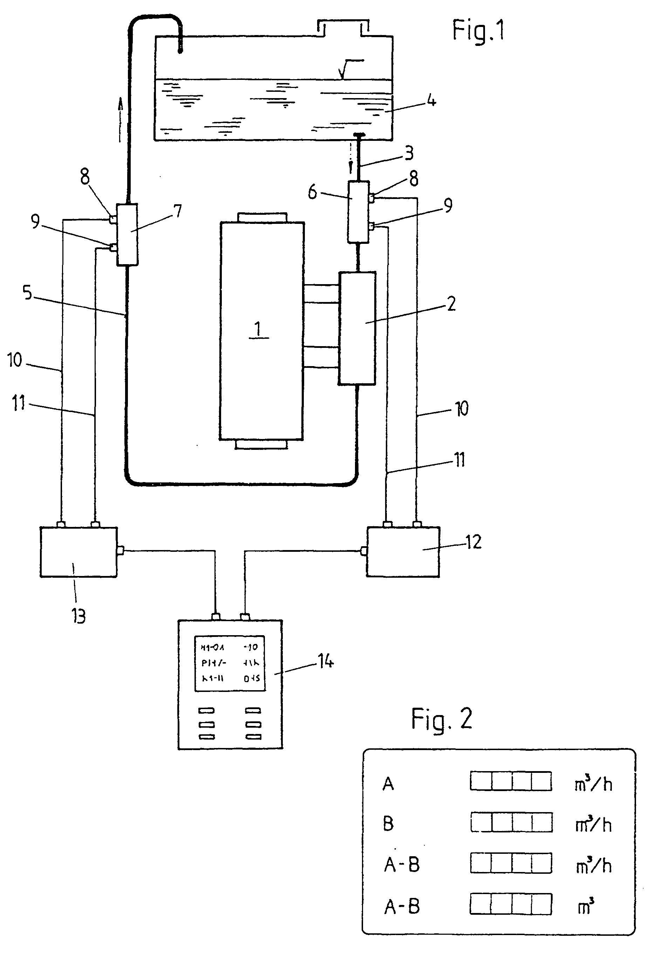

Aufgrund der konstruktionsbedingten Arbeitsweise der als Kolbenpumpe ausgebildeten Treibstoffeinspritzpumpe fließt der überwiegende Teil der Treibstoffmenge in Richtung der aus Fig. 1 ersichtlichen Pfeile. Die in den Leitungen 3 und 5 auftretenden Druckschwankungen bewirken jedoch eine kurzzeitige und periodische Umkehr der Strömungsrichtung des Treibstoffes. Die bei leistungsstarken Aggregaten und langen Betriebszeiten dadurch anfallenden rückfließenden Mengen können dank der erfindungsgemäßen Maßnahme das Meßergebnis nicht mehr verfälschen, da diese rückfließenden Mengen nunmehr erfaßbar sind und in den Anzeigen berücksichtigt sind.

Aus dem Verhältnis des Durchflusses in der Zuführ- und Rückführleitung zum Verbraucher sowie aus den Frequenzänderungen der Sensoren, die ein Maß für die Durchflußvariationen sind, läßt sich auch auf Betriebszustände und Gefahren schließen. So kann es dann, wenn der Verbrauch im Verhältnis zum Umlauf zu groß wird, zu Drücken im Niederdrucksystem kommen, die weit unter den Sollwert von ca. 8 bar absinken. Damit steigt die Gefahr von Kavitationen, die Komponenten des Motors, beispielsweise die Steuerkanten der Einspritzkolbenpumpen, beschädigen können. Falls der Durchfluß stark variiert, kann die Ursache auch eine unzulässig schlechte Ölqualität sein. Schlechtes Öl hat eine hohe Viskosität, ist träger und verursacht höhere Druckimpulse. Diese Druckimpulse können wieder Kavitation verursachen oder Komponenten rein mechanisch beanspruchen. Weiters kommt es vor, daß Druckhalteventile im Niederdrucksystem falsch eingestellt sind. Im Niederdrucksystem muß einerseits ein gewisser Anlagendruck herrschen, damit das Füllen der Einspritzpumpen-Förderkammem gewährleistet ist, andererseits unterstützt ein Druckgefälle den Kraftstofffluß. Bei falscher Einstellung kann es nicht nur zu einer kurzzeitigen, sondern auch zu einer dauerhaften Umkehr der Flußrichtung kommen. Dann wird der Einspritzpumpe ungefilterter Kraftstoff aus der Rücklaufleitung entnommen. Durch die Durchflußmessung im Vor- und Rücklauf kann dieses Verhalten kontrolliert werden. Insgesamt kann das System dann, wenn der Durchfluß im obigen Sinne interpretiert wird, nicht nur als Durchflußmeßsystem, sondern auch als Wamsystem verwendet werden. Die gewonnenen Meßwerte dienen also auch zur Beurteilung des Betriebszustandes. Aus solchen Daten ist auch erkennbar, daß evtl. die Einrichtung gewartet und überholt werden muß.

Im gezeigten Ausführungsbeispiel nach Fig. 1 sind sowohl in der Zuführleitung 3 wie auch in der Rückführleitung 5 jeweils Meßgeräte 6, 7 angeordnet, die jeweils zwei Signalgeber bzw. Sensoren 8, 9 aufweisen. Es liegt im Rahmen der Erfindung, ausschließlich in der Rückführleitung 5 Meßgeräte dieser Bauart zu verwenden und in der Zuführleitung 3 solche Meßgeräte, die nur einen Signalgeber bzw. Sensor aufweisen. Auch mit einer solchen Einrichtung lassen sich wichtige Maschinendaten ermitteln. In der Figurenbeschreibung wurde von Impulsen gesprochen. Der Begriff Impuls ist ganz allgemein zu verstehen in der Bedeutung von Signal. Solche Signale können sehr unterschiedliche Formen und Gestalten besitzen. Sofern sie richtungsabhängig detektierbar sind, sind sie für den beschriebenen Einsatzzweck brauchbar.

### Legende

### zu den Hinweisziffern:

- 1: Dieselaggregat
- 2: Treibstoffeinspritzpumpe
- 3: Zuführleitung
- 4: Treibstoffvorratsbehälter
- 5: Rückführleitung
- 6: Meßgerät - Schraubenspindelverdrängungsvolumeter
- 7: Meßgerät - Schraubenspindelverdrängungsvolumeter
- 8: Sensor
- 9: Sensor
- 10: Verbindungsleitung
- 11: Verbindungsleitung
- 12: Impulsselektor
- 13: Impulsselektor
- 14: Zähler

## Patentansprüche

1. Verfahren zum Ermitteln des Treibstoffverbrauches bzw. des Betriebszustandes von Verbrennungskraftmaschinen mit einer Treibstoffeinspritzpumpe, insbesondere bei Dieselmotoren, wobei in einer einen Treibstoffvorratsbehälter (4) und die Treibstoffeinspritzpumpe (2) verbindenden Zuführleitung (3) und in einer von der Treibstoffeinspritzpumpe (2) zum Treibstoffvorratsbehälter (4) führenden Rückführleitung (5) je ein das strömende Treibstoffvolumen erfassendes Meßgerät (6, 7) vorgesehen ist mit je einem Signalgeber bzw. Sensor (8, 9) und jedes Meßgerät (6, 7) Signale liefert und gegebenenfalls den Meßgeräten (6, 7) Signalabgleich- und/oder Signalumformstufen zugeordnet sind, **dadurch gekennzeichnet, daß** zumindest in der Rückführleitung (5) ein Meßgerät (7) mit mindestens zwei Signalgebern bzw. Sensoren (8, 9) verwendet wird zur Abgabe von strömungsrichtungsabhängigen Signalen und daß die aus beiden Durchströmrichtungen gewonnenen Signale einem Signalselektor (12, 13) zugeleitet werden, daß die aus den jeweiligen gleichen Strömungsrichtungen gewonnenen Signale addiert werden und anschließend die aus der einen Strömungsrichtung gewonnenen Signale und die aus der anderen Strömungsrichtung gewonnenen Signale voneinander subtrahiert werden und die so gewonnene Signalsumme bzw. Signaldifferenz zur Treibstoffverbrauchszählung bzw. -anzeige verwendet wird.

2. Verfahren nach Anspruch 1, **dadurch gekennzeichnet, daß** sowohl in der Rückführleitung (5) wie auch in der Zuführleitung (3) je ein Meßgerät (6, 7) mit jeweils mindestens zwei Signalgebern bzw. Sensoren (8, 9) zugeordnet wird.

3. Verfahren nach Anspruch 1 oder 2, **dadurch gekennzeichnet, daß** als Meßgerät (6, 7) ein Schraubenspindelverdrängungsvolumeter mit mindestens zwei zueinander versetzt angeordneten Sensoren (8, 9) verwendet wird.

## Claims

1. A method of determining the fuel consumption and the operating state of internal-combustion engines having a fuel-injection pump, in particular in diesel engines, wherein one respective measuring instrument (6, 7) detecting the flowing volume of fuel and having one respective signal transmitter or sensor (8, 9) is provided in a supply line (3) connecting a fuel storage tank (4) and the fuel-injection pump (2) and in a return line (5) leading from the fuel-injection pump (2) to the fuel storage tank (4), and each measuring instrument (6, 7) emits signals, and signal-balancing and/or signal-conversion stages are optionally associated with the measuring instruments (6, 7), **characterized in that** at least in the return line (5) a measuring instrument (7) with at least two signal transmitters or sensors (8, 9) is used for emitting signals dependent upon the flow direction, and the signals obtained from both through-flow directions are supplied to a signal selector (12, 13), the signals obtained from the respective same flow directions are added, and after that the signals obtained from one flow direction and the signals obtained from the other flow direction are subtracted one from the other and the sum or difference respectively of the signals which is obtained in this way is used for counting or indicating the fuel consumption.

2. A method according to Claim 1, **characterized in that** one respective measuring instrument (6, 7) having at least two signal transmitters or sensors (8, 9) in each case is associated both in the return line (5) and in the supply line (3).

3. A method according to Claim 1 or 2, **characterized in that** a screw-spindle displacement volumenometer with at least two sensors (8, 9) arranged offset with respect to each other is used as the measuring instrument (6, 7).

## Revendications

1. Procédé de détermination de la consommation de carburant, respectivement de l'état de fonctionnement d'une machine à combustion interne comprenant une pompe d'injection de carburant, en particulier dans les moteurs diesel, dans lequel il est prévu, dans une conduite d'alimentation (3) reliant un réservoir de stockage de carburant (4) et la pompe d'injection de carburant (2) et dans une conduite de retour (5) menant de la pompe d'injection de carburant (2) au réservoir de stockage de carburant (4), respectivement, un appareil de mesure (6, 7) détectant le volume de carburant en circulation et chaque appareil de mesure (6, 7) délivre des signaux et des cellules d'ajustement et/ou de façonnage des signaux sont éventuellement affectées aux appareils de mesure (6, 7), **caractérisé en ce qu'**au moins dans la conduite de retour (5), on utilise un appareil de mesure (7) équipé d'au moins deux transmetteurs de signaux ou capteurs (8, 9) pour délivrer des signaux fonction du sens d'écoulement et **en ce que** les signaux tirés des deux sens de passage sont acheminés à un sélecteur de signal (12, 13), **en ce que** les signaux tirés des sens d'écoulement égaux respectifs sont ajoutés et, ensuite, les signaux tirés du premier d'écoulement et les signaux tirés de l'autre sens d'écoulement sont soustraits les uns des autres et **en ce qu'**on utilise la somme ou la différence de signaux ainsi obtenue pour compter ou afficher la consommation de carburant.

2. Procédé selon la revendication 1, **caractérisé en ce que** l'on affecte autant à la conduite de retour (5) qu'à la conduite d'alimentation (3), respectivement un appareil de mesure (6, 7) avec respectivement deux transmetteurs de signaux ou capteurs (8, 9).

3. Procédé selon la revendication 1 ou 2, **caractérisé en ce que** l'on utilise comme appareil de mesure (6, 7) un appareil volumétrique à déplacement à broche filetée comprenant au moins deux capteurs (8, 9) décalés l'un de l'autre.
